# EUROPÄISCHE PATENTSCHRIFT

(11) **EP 2 172 053 B1**
(45) Veröffentlichungstag und Bekanntmachung des Hinweises auf die Patenterteilung: **06.04.2011**
(21) Anmeldenummer: 08715540.4
(22) Anmeldetag: 04.03.2008
(51) Int. Cl.: H04Q 9/02, A47B 31/06, B64D 11/00

(54) **ROLLCONTAINER**
TROLLEY
CHARIOT PORTE-PLATEAUX

(30) Priorität: 06.03.2007 DE 102007011208
(43) Veröffentlichungstag der Anmeldung: 07.04.2010
(73) Patentinhaber: Rombach, Jörg, 16567 Schönfließ (DE)
(72) Erfinder: ROMBACH, Jörg, 16567 Schönfliess (DE); FROWEIN, Dirk, 86415 Mehring (DE)
(86) Internationale Anmeldenummer: PCT/DE2008/000391
(87) Internationale Veröffentlichungsnummer: WO 2008/106954

(56) Entgegenhaltungen:
- DE-A1- 10 319 493
- DE-A1- 19 732 597
- US-A1- 2003 231 118
- US-A1- 2006 020 380

## Beschreibung

Die vorliegende Erfindung betrifft einen Rollcontainer zum Einsatz insbesondere in der Kabine aber auch im Frachtraum eines öffentlichen Verkehrsmittels, insbesondere in einem Verkehrsflugzeug, mit einer auf dieses Verkehrsmittel angepassten Größe, wobei dem Rollcontainer eine Rechnereinheit, insbesondere ein Micro- Computer zugeordnet ist, auf dem ein Programm zur Datenverarbeitung läuft. Die Erfindung betrifft ebenso ein System mit einem solchen Rollcontainer, sowie ein Verfahren zur Unterstützung der Wartung von dem Verkehrsmittel zuzurechnenden Ausrüstungsgegenständen.

Derartige Rollcontainer sind insbesondere von Verkehrsflugzeugen und Fernreisezügen, von Personenfähren und Kreuzfahrtschiffen, sowie von Reisebussen bekannt. Dort werden sie zur Ausgabe von Speisen und Getränken, zur Aufnahme von Abfällen, sowie zum Transport von Verbrauchsgütern des täglichen Bedarfs genutzt. Das besondere an den Rollcontainer ist ihre angepasste Größe, die das problemlose Fortbewegen in den meist engen Gängen dieser Verkehrsmittel ermöglicht. Im Hinblick auf ihren Einsatz ist die Größe der meisten Rollcontainer auch dahingehend normiert, dass sie sich bequem aus dem Verkehrsmittel herausführen und durch andere, mit Speisen und Getränken frisch bestückte Rollcontainer ersetzen lassen. Außer zur mobilen Versorgung der Fahrgäste haben die bekannten Rollcontainer bislang keine weitere Verwendung.

Dokument DE 197 32 597 A1 offenbart einen Rollcontainer mit einem Transponder, um eine sichere Datenübertragung zwischen dem Transponder und einem Lesegerät zu gewährleisten.

Wegen der starken Beanspruchung unterliegen solche Rollcontainer einem relativ großen Verschleiß, der insbesondere die beweglichen Teile, wie Rollen oder Schubfächer betrifft. Es bestehen derzeit auch Tendenzen, die Funktion der Rollcontainer auszuweiten und sie zu diesem Zweck mit elektronischen Geräten, insbesondere mit einem Mikrocomputer, auszustatten. Diese "Aufrüstung" der Rollcontainer trägt ihr Übriges zu einer erhöhten Anfälligkeit bei.

Problematisch an dem Verschleiß ist, dass die Fehler sich selten vorher ankündigen und meist zu einem ungünstigen Zeitpunkt, nämlich während des Einsatzes, auftreten. Aus diesem Grund wird auch heute schon in geringem Umfang versucht, die Wartung der Rollcontainer zu dezentralisieren, wobei ein defekter Rollcontainer am Zielort repariert oder ganz aus dem Verkehrsmittel genommen und durch einen anderen ersetzt wird. Diese Art der Wartung ist jedoch verhältnismäßig aufwendig und funktioniert, wenn überhaupt, nur an Zielorten mit einem hohem Durchsatz. Schließlich müssten massenweise Ersatzteile respektive ganze Rollcontainer an den einzelnen Orten vorgehalten werden. Ähnlich wie im Falle der Wartung der Rollcontainer ist es auch mit der Wartung sonstiger dem Verkehrsmittel zuzurechnender Ausrüstungsgegenstände, für die entsprechende Ersatzteile vorgehalten werden müssen.

Aufgabe der vorliegenden Erfindung ist es daher, einen Rollcontainer vorzuschlagen, der mit einfachen Mitteln eine komfortable und zuverlässige Wartung seiner selbst und auch anderer Ausrüstungsgegenstände des Verkehrsmittels unterstützt. Aufgabe der vorliegenden Erfindung ist es auch, ein System umfassend einen solchen Rollcontainer vorzuschlagen, das die Wartung und den Ersatz defekter Bauteile ermöglicht. Zudem ist es Aufgabe, ein Verfahren zur Organisation der Wartung vorzuschlagen.

Diese Aufgaben werden gelöst durch einen Rollcontainer mit den kennzeichnenden Merkmalen des Anspruch 1, ein Verfahren nach Anspruch 10 und das System nach Anspruch 13. Besonders vorteilhafte Ausführungsformen sind in den jeweiligen Unteransprüchen genannt.

Der erfindungswesentliche Grundgedanke liegt darin, dass der Rollcontainer, nachfolgend auch "Trotiey" genannt, mit Mitteln ausgestattet wird, die einen definierten messbaren Betriebszustand, nachfolgend auch ,,Quatitätsstatus", feststellen und zur Weiterverarbeitung bereit halten können. Ein solcher Qualitätsstatus ist beispielsweise ein Defekt eines zum Verkehrsmittel gehörigen Ausrüstungsgegenstandes, der auch der Trolley selber sein kann. Dieser wird vorteilhafterweise automatisch festgestellt und das Ergebnis dieser Feststellung wird als Datum für die weitere Verarbeitung insofern bereitgestellt, als die Daten auf geeignete Art unmittelbar nach der Feststellung oder zu gegebener Zeit an eine zentrale Stelle übermittelt werden, wo sie weiter verarbeitet werden können. Dabei werden als solche definierten Betriebszustände erfindungsgemäß Angaben betreffend einen sich anbahnenden oder einen vorliegenden technischen Defekt oder aber die verbleibende Zeit innerhalb eines Wartungsintervalls des betreffenden Ausrüstungsgegenstand angesehen.

Dabei hat die erfindungsgemäße Nutzung des Trolleys, wie er insbesondere kommerziell in Standardgrößen ,,small size", ,,half size" oder ,,full size" erhältlich ist, einen ganz erheblichen Vorteil: Dieser liegt darin, dass mit dem Trolley ein in seiner Größe genormtes Mittel zur Verfügung steht, das nicht unmittelbar dem Verkehrsmittel zugerechnet wird und daher nicht unter die gerade bei Flugzeugen entsprechend strengen Sicherheitsvorschriften fällt. Der Trolley kann somit als "unbehelligter" Begleiter gewissermaßen als Schnittstelle zwischen dem Flugzeug Service Personal und der Außenwelt dienen. Er lässt sich dabei vom Personal bequem im Verkehrsmittel handhaben. Im Sinne der Erfindung wird unter das Merkmal ,,Trolley" auch alles subsummiert, was zumindest etwa der Größe der bekannten Trolleys entspricht und sich wie diese rollend fortbewegen lässt. Vorteilhafterweise hat der erfindungsgemäße Trolley neben der erfindungsgemäßen Funktion auch noch die Funktion der Aufbewahrung beispielsweise von Speisen und Getränken. In einer besonders vorteilhaften Ausgestaltung wird ein kommerziell erhältlicher für Speisen und Getränke eingesetzter Trolley lediglich für den erfindungsgemäßen Einsatz umgerüstet.

Heute bekannte Ausführungsformen der Trolleys sind in ihrer Standardversion mit einem Einschubfach im oberen Teil ausgerüstet. Dieses Einschubfach kann vorteilhafterweise genutzt werden, um statt des herkömmlichen Tabletts die Hardware, insbesondere die Registriermittel und die Rechnereinheit, darin herausziehbar einzusetzen. Dabei kann auf dieser Hardware eine zur Speicherung der Daten geeignete Software und das Betriebssystem vorteilhafterweise in zweifacher Form realisiert sein. Zusätzlich kann dieses Einschubfach mit Komponenten, wie einer Antenne, einem RFID-Tag Lesegerät, einer Bluetooth, WiFi, WLAN oder sonstigen Schnittstelle und/oder einem Akku ausgerüstet sein. Das Einschubfach kann austauschbar gestaltet sein und an die Bedürfnisse unterschiedlicher Kunden angepasst werden.

Da sich die Erfindung besonders vorteilhaft in Verkehrsflugzeugen umsetzen lässt, wird sie nachfolgend, ohne dass das mit einer Einschränkung einhergehen soll, anhand dieses Einsatzgebietes beschrieben. Zu unterscheiden sind dabei zwei Formen der Wartung, die sich auch ergänzen können. So trägt die Erfindung zum einen dazu bei, dass für den Trolley selber eine komfortable Wartung im Sinne einer ,,Selbstdiagnose" möglich ist. Der Trolley kontrolliert seinen Betriebszustand also selber und sorgt bei Bedarf für eine entsprechende Reparatur. Zum anderen kann der Trolley als für das Verkehrsmittel maßgeschneidertes Vehikel genutzt werden, das im Sinne einer ,,Fremddiagnose" Betriebszustände anderer Ausrüstungsgegenstände, beispielweise der Sitze, des Verkehrsmittels abfragt. Diese Informationen werden dann zur Wartung dieser Ausrüstungsgegenstände genutzt.

Bei der ersten Form, der ,,Selbstdiagnose", kann die Abfrage des Qualitätsstatus mit den Registrierungsmitteln des Trolleys bewerkstelligt werden, wobei diesen Registrierungsmitteln vorteilhafterweise Sensoren zugeordnet sind, mit denen sich der Verschleiß automatisch erfassen lässt. Diese Sensoren sind vorteilhafterweise im oder am Trolley befestigt. Beispielsweise ist es möglich, dass an einer entsprechenden Stelle Beschleunigungssensoren angebracht sind, mit denen Vibrationen, die beispielsweise auf Unwuchten oder Lagerschäden zurückzuführen sind, detektiert werden. Insbesondere werden Veränderungen von Betriebsparametern im Vergleich zu den Betriebsparametern des neuwertigen Ausrüstungsgegenstandes detektiert. Auch akustische Sensoren, wie auf spezielle Frequenzen geeichte Mikrofone, können eingesetzt werden, um Betriebsstörungen zu detektieren. Zudem können Lager mit Temperaturfühlern überwacht werden. Die aufgenommenen Sensorsignale werden dann den Registriermitteln, die sich insbesondere eines Mikrocomputers bedienen, zugeführt und dort im Hinblick auf die Diagnose ,,pathologischer" Zustände ausgewertet. Es ist auch möglich, dass die Sensor- und Registrierungsmittel den baldigen Ablauf einer Wartungsperiode des Trolleys oder bestimmter Komponenten des Trolleys melden. Dazu sind die Daten der Wartungsintervalle ähnlich wie von Kraftfahrzeugen bekannt, in den Sensor- und Registrierungsmitteln gespeichert und werden mit registrierten Standzeiten verglichen. Nach erfolgter Wartung werden die Daten zurückgesetzt. Die Sammlung und Sicherung der Daten über einen definierten Zeitraum erfolgt vorteilhafterweise in einer an einem Standort vorhandenen zentralen Datenbank mit Verbindung in das Internet. Die Datenvorhaltung, das Monitoren, die Wartung und die Instandhaltung können dabei nach den Prinzipien der vertikalen Integration erfolgen.

Die zweite Form des Einsatzes, die "Fremddiagnose", kann im einfachsten Fall geschehen, indem über Eingabemittel, die am Trolley angebracht sind, der Betriebszustand eines Ausrüstungsgegenstandes vom Personal eingegeben und von den Registriermitteln weiter verarbeitet wird. Wenn beispielsweise eine Leiste eines Sitzes gebrochen ist, kann dieser Defekt eingegeben werden. Es ist auch möglich, an besonders sensiblen Teilen, wie stark beanspruchten Leisten oder häufig benutzen Motoren, Sensorelemente anzubringen, die einen Defekt melden. Dazu bieten sich beispielsweise Dehnungssensoren oder Widerstandsmessungen an.

Sowohl nach einer Selbstdiagnose als auch nach einer Fremddiagnose liegen Daten betreffend den Qualitätsstatus des Trolleys selber und/oder eines anderen Ausrüstungsgegenstandes vor. Anhand dieser Daten kann dann die Reparatur in möglichst kurzer Zeit organisiert und optimiert nach Zeit und Raum durchgeführt werden. Diese am Registriermittel anliegenden Daten müssen dazu entsprechend weiter geleitet werden. Dabei können die Daten im einfachsten Fall ausgedruckt oder auf einem Datenträger, beispielsweise eines USB Stick, aufgezeichnet und dem Trolley entnommen werden, bevor der Datenträger an einer zentralen Stelle, dem "Service-Point", mittels eines Computers ausgelesen wird. Anhand solcher Präsentationen kann sich das Servicepersonal, wie z. B. der "Dispatcher", dann an zentraler Stelle einen Überblick über die präventive und Ereignis bezogene Wartung verschaffen. Diese Art der Datenverarbeitung ist jedoch bei akuten Defekten nicht sonderlich komfortabel, da die Übertragung erst nach der Ankunft ,,zufuß" geschehen kann.

Wesentlich vorteilhafter ist es, Mittel vorzusehen, die eine zeitnahe Ferndatenübertragung von dem Registriermittel hin zum Service-Point gewährleisten. Eine solche Fernübertragung kann innerhalb des Verkehrsmittels einer Funknahverbindung, wie Bluetooth, WiFi oder WLAN, bedienen, um dann außerhalb des Verkehrsmittels über Funk eingespeist und insbesondere über das Internet abgewickelt zu werden. Auch eine direkte Verbindung, beispielsweise über GSM oder UMTS, zwischen Trolley und Service Point, respektive einer Relais-Station, ist denkbar. Dazu hat der Trolley eine entsprechende Sende- und/oder Empfangseinheit zum Datenaustausch auf dem Wege der Funkdatenübertragung.

Besonders vorteilhaft ist es auch, wenn der Trolley einen Sensor, der seinen Standort registriert, aufweist. Solche Sensoren können als "GPS Sensor", ausgebildet sein. Die Daten des errechneten Standorts können dann über die Funkdatenübertragung an den Service-Point übergeben werden, der diese Daten mit einem geschätzten Standort abgleichen kann. Auf diese Weise ist das System immer über den aktuellen Standort des Trolley informiert.

Wenn die Daten am zentralen Service Point angelangt sind, können sie bearbeitet und beplant werden. Insbesondere werden anhand der Daten Bestellung und Auslieferung der Ersatzteile automatisch organisiert, respektive Service Techniker informiert. Mit dieser Verfahrensweise ist es dem Service Personal möglich, die genauen, zugeordneten und passenden Bauteile zur richtigen Zeit am richtigen Ort zu haben, um dann Kosten optimiert die notwendige Reparatur durchführen zu können. In einer besonderen Ausführungsform werden die Daten von Außen aus den Registriermitteln ,,remote" abgefragt. Solche Fernabfragen sind auch aus dem Automobil-Serviceumfeld bekannt. Bei der ,,remote" Fernabfrage kann sich das Servicepersonal mittels eines externen Gerätes in die Registrierungsmittel des Trolleys einwählen und die Daten aktuell einsehen. Auf das Einwählen kann auch verzichtet werden, wenn der Trolley sich selber in zyklischer Wiederkehr oder im Schadensfall beim Servicepersonal meldet.

Neben der planmäßigen Wartung gibt es die außerplanmäßige Reparatur. Eine solche wäre beispielsweise die gebrochene Leiste eines Sitzes, in dem ein schwerer Passagier gesessen hat. Das Aufspüren der gebrochenen Leiste kann automatisch über einen an der Leiste angebrachten Dehnstreifen geschehen, den das Sensormittel am Trolley ausliest. Die Reparatur kann dann im Rahmen einer außerplanmäßigen Wartung durchgeführt werden, die von dem ,,Remote-System" unterstützt wird. Das System meldet den Fehler an die Zentrale, von wo eine neue Leiste auf den Weg gebracht wird. Am nächst möglichen Zielort steht die Leiste dann zum Austausch zur Verfügung, wobei der Austausch vom System registriert wird. Damit wird eine Kostenoptimierung und eine Personaleinsatzplanung möglich.

Für den Fall, dass am Trolley eine Rolle defekt ist und ausgetauscht werden muss, kann das "Remote"- System die defekte Rolle als wichtigen und dringlichen Schaden melden, der möglichst bald zu beheben ist. Dabei können Detailinformationen dazu übermittelt werden, was an der Rolle genau defekt ist, so dass das Service Personal entscheiden kann, ob eine neue Rolle gebraucht wird oder ob es reicht, wenn beispielsweise die Bremse repariert oder ausgetauscht wird. Mit dem Remote-System ist es somit möglich, sich von fern, insbesondere von dem zentralen Service-Point aus, mit dem Mikrocomputer des Trolleys in Verbindung zu treten, um die Situation zu analysieren. Dieser Service Point hat eine Datenbank, die im Hintergrund läuft. Vorteilhafterweise ist ein zentrales Ausgabemittel zur Anzeige der Daten vorhanden, so dass die Verfügbarkeiten der Ausrüstungsgegenstände jederzeit überwacht werden können. Auch eine Inventur unabhängig vom Ort ist möglich.

Ein besonderer Vorteil der Erfindung liegt darin, dass defekte Teile unmittelbar und automatisch an den Ort geschickt werden können, wo sie gebraucht werden. Des Weiteren kann das Auffüllen des Lagers automatisch durch Mitteilung an den Lieferanten erfolgen. Servicelevel können registriert und bei kritischen Zeiten schnell gemäß Vertrag eingefordert werden. Wenn nun in einem zentralen Lager für die Ersatzteilversorgung die benötigte Rolle liegt, wird diese mit dem nächst möglichen Verkehrsmittel an den Ort geschickt und kann dort ausgetauscht werden. Vorteilhafterweise hat der Trolley eine Anzahl von Ersatzteilen, Werkzeugen und Einsatzlisten für Mitarbeiter integriert. Um diese zu verwalten ist der Trolley mit einem RFID Lesegerät und einem Mikrocomputer ausgestattet, wobei die mitgeführten Objekte mit RFID Tags versehen sind. So übermittelt jedes Objekt in diesem Trolley seine Verfügbarkeit an das System.

Entsprechend dem erfindungsgemäßen Verfahren wird demnach ein Trolley mit einer auf das Verkehrsmittel angepassten Größe durch das Verkehrsmittel bewegt, insbesondere geschoben, wobei die Service-, Zeit- und Betriebszustände verschiedener Ausrüstungsgegenstände abgefragt und an eine mit dem Rollcontainer in Verbindung stehende zentrale Rechnereinheit übermittelt werden. Zudem ist es dem Personal des Verkehrsmittels, insbesondere des Verkehrsflugzeugs, durch das Mitführen des Trolleys möglich, die an einer beliebigen Stelle des Verkehrsmittels anfallenden Daten sofort in die Datenverarbeitung einzugeben. Durch die Erfindung wird die Organisation der Wartung von Ausrüstungsgegenständen erheblich vereinfacht.

Statt in jeder Rechnereinheit eines Trolleys eine eigene Datenbank vorzuhalten, ermöglicht das Vorhandensein einer zentral angeordneten Kommunikationseinheit die Integration einer zentralen Datenbank, an die die einzelnen mobilen Rechnereinheiten Daten übermitteln und abfragen. Über eine Schnittstelle der Datenbank sind die gesammelten Daten des Verkehrsmittels auch für den externen Gebrauch einfach abrufbar und verwertbar.

In einer bevorzugten Ausführungsform ist die Rechnereinheit ein PDA. Ein solcher PDA ist kompakt und kann standardisiert an die Maße der Trolleys angepasst und vorzugsweise in diesen integriert werden. Über seine Touch-Screen ermöglicht der PDA zudem die einfache Abfrage und Ausgabe der gewünschten Informationen. Besonders vorteilhaft ist es, für den PDA eine vordefinierte Benutzeroberfläche vorzusehen und diesen in der Art eines MDA mit einer Funkschnittstelle auszurüsten.

Dabei ist der erfindungsgemäße Trolley nicht nur im Verkehrsmittel, insbesondere im Flugzeug, sondern vor und nach dem Flug auch im Bereich des Flughafengebäudes einsetzbar, wo gegebenenfalls benötigte Ersatzteile lagern. Nach dem Herausbringen des Trolleys aus dem Flugzeug können die erfassten Daten insbesondere per drahtloser Kommunikation auf eine zentrale Datenbasis transferiert werden. Damit macht der erfindungsgemäße Trolley Flugzeuge insofern zu "fliegenden Rechenzentren", als diese Flugzeuge zumindest immer dann, wenn sie am Boden sind aber auch in der Luft zwischen verschiedenen Flugzeugen die sich über IP-Satellitenverbindung beziehungsweise bei räumlicher Nähe direkt "unterhalten", die Daten austauschen und abliefern, so dass diese Informationen dann einer zentralen Datenbank vorliegen. Damit können Veränderungen zu der eigentlichen Bestandsphase zu geplanten und ungeplanten Service Intervallen von Gebrauchs und Verbrauchsgütern der Maschine sofort erfasst und entsprechende Ersatzteile nachbestellt werden.

Ab einer entsprechenden Größe des Verkehrsmittels wird eine Mehrzahl von Trolleys eingesetzt. Es ist dann sinnvoll, die von den Rechnereinheiten einzelner Trolleys erfassten Daten zu einer Gesamtübersicht der gesammelten Daten im Verkehrsmittel zusammenzuführen. Hierfür verfügen die Rechnereinheiten über Mittel zur gegenseitigen Kommunikation. In einer einfachen Ausführung reichen drahtgebundene Schnittstellen zum Datenaustausch aus, z.B. in den Aufbewahrungspositionen der Trolleys. Vorteilhafterweise kommunizieren die mobilen Rechnereinheiten drahtlos, beispielsweise mittels WLAN oder Bluetooth um jederzeit aktuelle Daten der anderen mobilen Rechnereinheiten abfragen zu können.

Durch den erfindungsgemäßen Trolley mit Rechnereinheit und dessen Verwendung zur Aufnahme und Verarbeitung von Informationen und Ressourcen in einem Verkehrsmittel werden dem Personal wie auch dem Betreiber des Verkehrsmittels aktuelle und betriebsnotwendige Informationen auf einfache Weise zur Verfügung gestellt und für eine Optimierung einzelner Glieder der Logistikkette nutzbar gemacht. Über die gespeicherten Daten lassen sich zudem der ordnungsgemäße Zustand einzelner Ausrüstungsgegenstände dokumentieren.

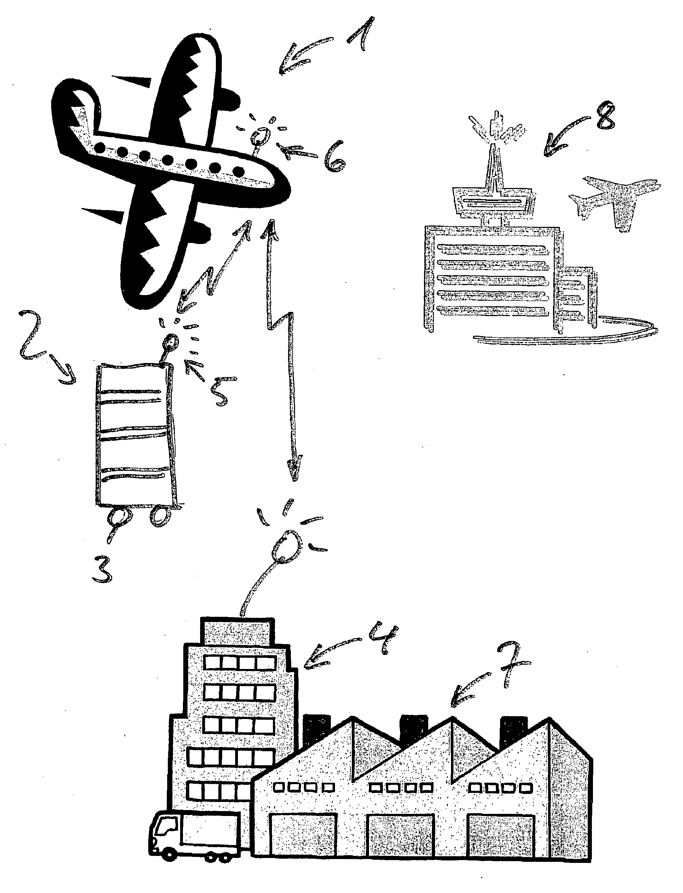

Nachfolgend wird eine Ausführungsform der Erfindung anhand der Figur näher beschrieben:

In der Figur ist ein in der Luft befindliches Flugzeug 1 abgebildet, in dem sich ein Rollcontainer 2 mit den bekannten auf das Flugzeug angepassten Dimensionen befindet. Dieser Rollcontainer 2 hat am Boden angeordnete Rollen 3 und wird vom Bordpersonal durch die Gänge des Flugzeugs 1 geschoben und dient zur Ausgabe von Speisen und Getränken. In dem Rollcontainer 2 befindet sich ein Micro-Computer, auf dem ein Programm zur Datenverarbeitung läuft. Dieser Rollcontainer 2 ist einerseits dazu fähig, eine Selbstdiagnose durchzuführen und das Ergebnis der Diagnose an einen Service-Point 4 am Boden zu übertragen. Dazu hat er einen Temperatursensor, der seinen Messwert dem Micro-Computer zuleitet. Micro-Computer und Temperatursensor bilden damit das Registrierungsmittel zur Registrierung eines definierten Qualitätsstatus, hier der Funktionsfähigkeit der Rollen 3. Der Micro-Computer hält die Funktionsfähigkeit der Rollen als Qualitätsstatus für eine Übertragung an eine zentrale Stelle bereit. Wenn es bei Lagerschaden zu einer Erhöhung der Reibung kommt, meldet das Registrierungsmittel einen Defekt.

Die Meldung geschieht in diesem Fall dadurch, dass über eine Antenne 5 eine Verbindung mit einer Schnittstelle im Fugzeug aufgebaut wird. Über den Flugfunk wird mittels der Antenne 6 eine Verbindung zu einem Computer im Service-Point 4 aufgebaut. Dort erkennt das Servicepersonal den Defekt zeitnah und kann eine Wartung organisieren. Dabei wird vom Servicepersonal eine neue Rolle aus dem Lager 7 an einen Zielflughafen 8 geordert, auf dem das Flugzeug erreichbar sein wird. Dazu wird sie vom Lager 7 mittels Luftfracht an den Zielflughafen 8 gebracht. Dieser Versandt kann nahezu vollständig automatisiert sein. Der am Zielflughafen 8 beschäftigte Mechaniker kann die Rolle dann während der Zeit des Aufenthalts problemlos mit ein paar Handgriffen auswechseln.

Ähnlich geht die Fremddiagnose anderer Ausrüstungsgegenstände vonstatten, zu der der Rollcontainer 2 auch fähig ist. Dazu hat der Rollcontainer 2 ein Sensormittel, mit dem die Standzeit der für die Sitzverstellung verwendeten Motoren auslesbar und an den Micro-Computer weiterleitbar ist. Durch die Sitzreihen geschoben, kann der Rollcontainer 2 die einzelnen Motoren auslesen und den drohenden Ablauf eines Wartungsintervalls an den Service-Point melden.

Der Austausch eines solchen Motors ist nach dem bezüglich der Rolle beschriebenen Verfahrens problemlos möglich.

## Patentansprüche

1. Rollcontainer (2) zum Einsatz in einem öffentlichen Verkehrsmittel, insbesondere in einem Verkehrsflugzeug (1), mit einer auf das Verkehrsmittel angepassten Größe, wobei dem Rollcontainer (2) eine Rechnereinheit, insbesondere ein Micro- Computer zugeordnet ist, auf dem ein Programm zur Datenverarbeitung läuft,
**gekennzeichnet durch**
ein Registrierungsmittel zur Registrierung eines Betriebszustandes eines zum Verkehrsmittel gehörigen Ausrüstungsgegenstandes, wobei das Registrierungsmittel den Wert des registrierten Betriebszustandes für eine Übertragung an eine Servicestation (4) bereithält und wobei der Wert des Betriebszustandes einen technischen Defekt des Ausrüstungsgegenstand oder den Ablauf eines dem Ausrüstungsgegenstand zugeordneten Wartungsintervalls bewertet.

2. Rollcontainer nach Anspruch 1,
**dadurch gekennzeichnet,**
**dass** dem Registrierungsmittel ein Sensor zugeordnet ist, das eine automatische Feststellung des Betriebszustandes ermöglicht.

3. Rollcontainer nach Anspruch 2,
**dadurch gekennzeichnet,**
**dass** das Registrierungsmittel das Speichern, Sichern und Darstellen über ein geeignetes mit dem Rollcontainer in Verbindung stehendes Display ermöglicht.

4. Rollcontainer nach Anspruch 1,
**dadurch gekennzeichnet,**
**dass** der Ausrüstungsgegenstand der Rollcontainer selber ist, wobei das mit Sensor ausgestattete Registrierungsmittel eine Selbstdiagnose durchführt.

5. Rollcontainer nach einem der vorherigen Ansprüche,
**dadurch gekennzeichnet,**
**dass** der Sensor den Betriebszustand vermittels einer Fernabfrage, insbesondere mittels Detektion der von den Ausrüstungsgegenständen modifizierten Bewegung, feststellt.

6. Rollcontainer nach Anspruch 1,
**dadurch gekennzeichnet,**
**dass** das Registrierungsmittel mit einem Eingabemittel, insbesondere mit einer Tastatur, ausgestattet ist.

7. Rollcontainer nach Anspruch 1,
**dadurch gekennzeichnet,**
**dass** das Registrierungsmittel und/oder die Rechnereinheit in einem Einschubfach eines für die Zwecke der Speisen- und Getränkeausgabe kommerziell erhältlichen Rollcontainers eingebaut ist.

8. Rollcontainer nach einem der vorherigen Ansprüche,
**gekennzeichnet durch**
eine Sende- und/oder Empfangseinheit zur Übertragung des Betriebszustandes auf dem Wege der Funkdatenübertragung.

9. Rollcontainer nach einem der vorherigen Ansprüche,
**gekennzeichnet durch**
Navigationsmittel, die des Standort des Rollcontainers im Verkehrsmittel registrieren.

10. Verfahren zur Unterstützung der Wartung eines Ausrüstungsgegenstandes eines öffentlichen Verkehrsmittels, insbesondere eines Verkehrsfugzeuges (1), wobei der Ausrüstungsgegenstand einen definierten und messbaren Betriebszustand hat, der einem technischen Defekt oder dem Ablauf eines Wartungsintervalls entspricht,
**dadurch gekennzeichnet,**
**dass** der Betriebszustand vermittels eines an einem Rollcontainer (2) befindlichen Registrierungsmittels festgestellt wird, wobei der Rollcontainer (2) eine auf das Verkehrsmittel angepasste Größe aufweist und wobei der Wert des Betriebszustandes im Registrierungsmittel für eine Übertragung an eine Servicestation (4) bereitgehalten wird.

11. Verfahren nach Anspruch 10,
**dadurch gekennzeichnet,**
**dass** der Rollcontainer durch das Verkehrsmittel bewegt, insbesondere geschoben wird, wobei Betriebszustände verschiedener Ausrüstungsgegenstände abgefragt und an eine zentrale Rechnereinheit der Servicestation übermittelt werden.

12. Verfahren nach Anspruch 10 oder 11,
**dadurch gekennzeichnet,**
**dass** anhand der an der Servicestation eingehenden Daten die Wartung zentral organisiert wird, wobei insbesondere Ersatzteile geordert und an den für die Wartung vorgesehenen Ort geschickt werden.

13. System zur Umsetzung des Verfahrens nach einem der Ansprüche 10 bis 12 aufweisend eine Vielzahl von Rollcontainern (2) nach einem der Ansprüche 1 bis 9
**gekennzeichnet durch**
eine Service-Station (4) mit einem zentralen Computer, der von den Rollcontainern (2) vermittels einer Funkdatenübertragung zugänglich ist, wobei auf dem zentralen Computer ein Programm zur Datenverarbeitung realisiert ist, das die Wartung von Ausrüstungsgegenständen organisiert.

14. System nach Anspruch 13,
**gekennzeichnet durch**
ein der Service-Station (4) zugeordnetes Lager (7) für Ersatzteile der Ausrüstungsgegenstände, wobei die im Lager (7) befindlichen Ersatzteile von dem Programm zur Datenverarbeitung erfasst sind.

## Claims

1. Trolley (2) for use in a mode of public or private transportation, in particular in a commercial aircraft (1), of a size suitable to the mode of transportation, whereby a data processing device, in particular a micro-computer on which runs a data processing program, is assigned to the trolley (2),
**characterized by**
a method to register the state of operations and/or location of equipment and inventory belonging to the mode of transportation, whereby the method of registration stores the registered value ready for transmission to a Service Station (4) and assesses the state of operations such a technical defect of the equipment or the expiry of a piece of equipment's maintenance interval.

2. Trolley according to requirement 1,
**characterized by**
a sensor assigned to the method of registration, which allows for automatic assessment of the state of operations.

3. Trolley according to requirement 2,
**characterized by**
the ability of the method of registration to allow for storing, backup and displayusing an appropriate display which is connected to the trolley.

4. Trolley according to requirement 1,
**characterized by**
the trolley itself being equipment whose method of registration has a sensor and carries out a self-diagnosis using a this sensor.

5. Trolley according to each of the preceding requirements,
**characterized by**
the sensor which ascertains the state of operations by means of a remote query, in particular by detecting the modified movement of equipment and inventory.

6. Trolley according to requirement 1,
**characterized by**
the method of registration being equipped with an input medium, in particular with a keyboard.

7. Trolley according to requirement 1,
**characterized by**
the housing of the method of registration and/or the data processing device in a drawer of a commercially available trolley designed for the purpose of distributing food and drink.

8. Trolley according to each of the preceding requirements,
**characterized by**
a sending and/or receiving device for transmitting the state of operations utilizing wireless datatransmission.

9. Trolley according to each of the preceding requirements,
**characterized by**
a method of navigation which registers the location of the trolley in any mode of transportation.

10. Method for assisting the maintenance of equipment belonging to a public or private mode of transportation, in particular a commercial aircraft (1), whereby the equipment has a definable and measurable state of operations that corresponds with a technical defect or the expiry of a maintenance interval,
**characterized by**
a mode of registration situated in a trolley (2) which ascertains the state of operations, whereby the trolley's (2) size is adapted to the mode of transportation and whereby the value of the state of operations is stored by the mode of registration for transmission to a Service Station (4).

11. Method according to requirement 10,
**characterized by**
the movement of the trol ley through the mode of transportation, in particular when the trol ley is pushed, whereby the states of operations of various pieces of equipment and inventory are queried and transmitted to a central data processing device at the Service Station.

12. Method according to requirement 10 or 11,
**characterized by**
the use of the incoming data to the Service Station to centrally organize maintenance, whereby, in particular, replacement parts are ordered and sent to the allocated location for maintenance work.

13. Framework for realization of the method according to each of the requirements 10 to 12 manifested in a multitude and distributed base of trolleys (2) according to each of the requirements 1 to 9,
**characterized by**
a Service Station (4) with a central computer, which is accessible by the trolley (2) by means of wireless data transmission, whereby a data processing program is implemented on the central computer, which organizes the maintenance of equipment.

14. Framework according to requirement 13,
**characterized by**
a storehouse (7) for equipment replacement parts assigned to the Service Station (4), whereby the replacement parts in the storehouse (7) are registered by the data processing program.

## Revendications

1. Conteneur sur roues (2) pour utilisation dans un moyen de transport public, tout particulièrement dans un avion (1) de compagnie aérienne, de dimensions adaptées au moyen de transport, sachant qu'une unité de calcul, tout particulièrement un micro-ordinateur lui (2) est attribué et sur laquelle un programme de traitement de données fonctionne,
**caractérisé en ce qu'**
un moyen d'enregistrement pour enregistrer l'état de service d'un objet d'équipement afférent au moyen de transport, le moyen d'enregistrement tenant la valeur de l'état de service enregistré prête à être transmise à une station service (4), la valeur de l'état de service évaluant un défaut technique de l'objet d'équipement ou le déroulement d'un intervalle de maintenance attribué à l'objet d'équipement.

2. Conteneur sur roues selon la revendication 1,
**caractérisé en ce qu'**
un capteur est attribué au moyen d'enregistrement, permettant une constatation automatique de l'état de service.

3. Conteneur sur roues selon la revendication 2,
**caractérisé en ce que**
le moyen d'enregistrement permet la mémorisation, la sauvegarde et la représentation par un écran approprié relié au conteneur sur roues.

4. Conteneur sur roues selon la revendication 1,
**caractérisé en ce que**
l'objet d'équipement est le conteneur sur roues lui-même, sachant que le produit d'enregistrement équipé du capteur effectue un auto-diagnostic.

5. Conteneur sur roues selon l'une des revendications précédentes,
**caractérisé en ce que**
le capteur constate l'état de service par une télé-interrogation, particulièrement par la détection du mouvement modifié par les objets d'équipement.

6. Conteneur sur roues selon la revendication 1,
**caractérisé en ce que**
le moyen d'enregistrement est équipé d'un moyen d'entrée, tout particulièrement d'un clavier.

7. Conteneur sur roues selon la revendication 1,
**caractérisé en ce que**
le moyen d'enregistrement et/ou l'unité de calcul est monté(e) dans un tiroir d'un conteneur sur roues aux fins de distributions des repas et boissons que l'on trouve dans le commerce.

8. Conteneur sur roues selon l'une des revendications précédentes,
**caractérisé en ce qu'**
une unité émettrice et/ou réceptrice pour transmission de l'état de service via transmission des données par radio.

9. Conteneur sur roues selon l'une des revendications précédentes,
**caractérisé en ce que**
des moyens de navigation qui enregistrent l'endroit où se trouve le conteneur sur roues dans le moyen de transport.

10. Processus pour assister la maintenance d'un objet d'équipement d'un moyen de transport public, particulièrement d'un avion de compagnie aérienne (1), l'objet d'équipement ayant un état de service défini et mesurable qui correspond à un défaut technique ou au déroulement d'un intervalle de maintenance,
**caractérisé en ce que**
l'état de service est constaté par un moyen d'enregistrement se trouvant sur un conteneur sur roues (2), celui-ci (2) ayant une dimension adaptée au moyen de transport et la valeur de l'état de service étant disponible dans le moyen d'enregistrement pour transmission à une station service (4).

11. Processus selon la revendication 10,
**caractérisé en ce que**
le conteneur sur roues, déplacé par le moyen de transport, particulièrement poussé, les états de service de divers objets d'équipement étant interrogés et transmis à une unité centrale d'ordinateur de la station service.

12. Processus selon la revendication 10 ou 11,
**caractérisé en ce que**
sur la base des données entrées à la station service, la maintenance soit organisée centralisée, particulièrement commander des pièces de rechange et les envoyer sur les lieux prévus pour la maintenance.

13. Système pour la conversion du processus selon l'une des revendications 10 à 12 ayant une multiplicité de conteneurs sur roues (2) selon l'une des revendications 1 à 9 **caractérisé en ce qu'**
une station service (4) avec un ordinateur central accessible par les conteneurs sur roues (2) par une transmission des données par radio, un programme de traitement de données étant réalisé sur l'ordinateur central qui organise la maintenance des objets d'équipement.

14. Système selon la revendication 13,
**caractérisé en ce qu'**
un des stocks (7) attribués à la station service (4) pour les pièces de rechange des objets d'équipement, les pièces de rechange se trouvant en stock (7), sont saisies par le programme pour le traitement de données.
